# EUROPEAN PATENT SPECIFICATION

(11) **EP 1 803 383 B1**
(45) Date of publication and mention of the grant of the patent: **10.04.2013**
(21) Application number: 05770341.5
(22) Date of filing: 10.08.2005
(51) Int. Cl.: A47L 13/17, A47L 13/20, C11D 17/04, C11D 3/20, C11D 3/18, C11D 3/382, C11D 3/48

(54) **CLEANING TOOL**
REINIGUNGSWERKZEUG
DISPOSITIF DE NETTOYAGE

(30) Priority: 09.09.2004 JP 2004262896; 26.11.2004 JP 2004341804
(43) Date of publication of application: 04.07.2007
(73) Proprietor: UNI-CHARM CORPORATION, Shikokuchuo-shi, Ehime 799-0111 (JP)
(72) Inventor: TSUCHIYA, Akemi, c/o Uni-Charm Corp. Tech. Center, Mitoyo-gun, Kagawa 7691602 (JP)
(74) Representative: Eke, Philippa Dianne
(86) International application number: PCT/JP2005/014625
(87) International publication number: WO 2006/027926

(56) References cited:
- JP-A- 9 066 014
- JP-A- 9 164 101
- JP-A- 2003 055 122
- JP-A- 2003 079 554
- JP-A- 2004 081 840
- US-A- 4 977 142
- US-B1- 6 326 339
- US-B1- 6 482 357
- US-B1- 6 777 064

## Description

### TECHNICAL FIELD

### BACKGROUND ART

The present invention relates to an indoor cleaning tool equipped with a fibrous base material. More specifically, the present invention relates to a cleaning tool that can reduce the antigenicity of matter that can provoke allergies.

In recent years, there has been a steady increase in the number of people afflicted with allergic diseases such as allergic rhinitis and bronchial asthma. The matter that provokes these allergic diseases is referred to as allergens, of which already approximately 200 types have been discovered today. Mites, mite carcasses, pet hair, and pollen are typical examples. These can provoke various allergic reactions through contact with or entry into the body.

In these cases, using chemicals or the like to kill the mites and the like that provoke allergies does not provide a complete solution since the mite carcasses also have antigenicity. Thus, reducing allergic reactions and preventing new sensitivities from developing requires either completely removing allergens from the living space or reducing the antigenicity of matter that provokes allergies by denaturing allergens or the like.

Examples of an agent for reducing antigenicity of allergy-inducing matter as described above are known from JP 200355127, US 4,977,142 and US 6,482,357 and these can include allergen inactivating agents made from Olea europaea and/or Ligustrum obtusifolium (Japanese laid-open patent publication number 2003-55122 -- Patent Document 1).

Also, there have been disclosed allergen-reducing agents formed as agents that can be applied or dispersed in an aqueous state onto floors, carpets, and floor mats in the form of an aqueous solution containing aluminum sulfate and sodium sulfate as the active components as an example of an agent for reducing allergens (Japanese laid-open patent publication number 2003-334240 -- Patent Document 2). With cleaning tools such as dust cloths, mops, and wipers used to remove indoor dust and particles, allergens become adhered to the cleaning tool during cleaning and stay on the cleaning tool for an extended time. As described above, reducing or preventing allergic reactions would require reducing the antigenicity of the allergens on the cleaning tool.

However, the agents in Patent Document 1 and 2 are all used by applying or dispersing them directly on places that can come into contact with the body, e.g., floor mats, carpets, floors, clothes. This makes it necessary to wipe away the agent or to remove it with a vacuum cleaner after application, resulting in a burden on the user. Easy elimination of allergy-inducing matter in the cleaning of dust and particles on floors and furniture that are cleaned most often has not been investigated. Also, since the conventional methods moisten the object being cleaned, the object must then be dried. Dry cleaning methods for reducing allergy-inducing matter have not been proposed. Furthermore, no research has been done on reducing antigenicity of allergy-inducing matter contained in dust and particles collected on dry cleaning tools such as mops.

More specifically, with indoor cleaning tools, disposable and replaceable dry tools equipped with fibrous base materials in sheet or brush form that contain essentially no moisture have been well-received in the market. With these dry cleaning tools, there is a need for the antigenicity-reducing composition to be adhesive to and permeable in the fibrous base material, and the transfer of the composition to the object being cleaned must be minimal.

The Patent Document 1 does not take into account the adhesiveness or the permeability of the composition. Also, the allergen-reducing agent in the

Patent Document 2 is meant to be used as an aqueous fluid, i.e., in a "wet" state in order to reduce allergens, and is not easily applicable to a dry cleaning tool that contains essentially no moisture.

US 6,777,064 discloses a cleaning sheet for removing allergens from surfaces.

### DISCLOSURE OF THE INVENTION

The object of the present invention is to overcome these problems and to provide a cleaning tool that can reduce the antigenicity of allergy-inducing matter adhered to the cleaning tool.

Based on careful research into overcoming the problems described above, the present inventors determined that the problems can be solved by applying an antigenicity-reducing component as a predetermined compound containing a lubricant and surfactant, resulting in the present invention. More specifically, the present invention provides the following.

A cleaning tool for indoor cleaning comprising a cleaning sheet, characterized in that the cleaning tool comprises a grasping tool and the cleaning sheet comprises a dry fibrous base material formed from layers which, starting in sequence from the top, include: a retained sheet formed from nonwoven cloth cut into multiple strips; a base sheet formed from a nonwoven cloth cut into multiple strips; fiber bundles formed from tow type fiber; and a strip sheet in which multiple strips are formed; wherein an antigenicity-reducing composition, containing an antigenicity-reducing component for reducing antigenicity of allergy-inducing matter, a lubricant, and a surfactant, is applied only to the fiber bundles of said fibrous base material.

Since the cleaning tool uses an antigenicity-reducing composition containing an antigenicity-reducing component reducing antigenicity of allergy-inducing matter, a lubricant, and a surfactant, this composition can be applied easily to a "dry-type" fibrous base material. Also, by applying the composition in this state, the antigenicity-reducing effect can be maintained in a stable manner over a long period of time. Also, by applying less composition, transfer of the composition during cleaning from the fibrous base material to the object being cleaned can be prevented.

In the present invention, "dry-type" refers to the lubricant having a greater proportion by weight than the moisture in the antigenicity-reducing composition, and a proportion of 5.0% moisture or less would be appropriate. The moisture must be solubilized in the lubricant. If the lubricant is emulsified, dust collection performance is reduced, making it undesirable.

(2) A cleaning tool as described in (1) wherein the antigenicity-reducing component is aqueous or hydrophilic. Also, (3) a cleaning tool as described in (1) or (2) wherein the antigenicity-reducing component is a plant extract component.

In these forms, the antigenicity-reducing component is aqueous or hydrophilic or is plant-derived, thus providing a high degree of human safety.

(4) A cleaning tool as described in any one of (1) through (3) wherein the antigenicity-reducing component is an extract from an olea or ligustrum plant extracted by using water or an organic solvent.

According to this, since extracts from an olea or ligustrum plant extracted by using water or an organic solvent (hereinafter referred to as olive extracts) provide superior antigenicity-reducing qualities, antigenicity can be reduced even through the application of small amounts. Also, some types of conventional plant-derived antigenicity-reducing components themselves have color, thus leading to problems when application results in discoloring of the base material. However, since the olive extract itself is yellow to yellowish brown in color, it becomes almost transparent when it has been diluted and applied to the fibrous base material, thus preventing discoloring of the base material.

(5) A cleaning tool as described in any one of (1) through (4) wherein the antigenicity-reducing component is oleuropein.

The oleuropein used here is a phenolic iridoid glycoside found in large quantities in olea and ligustrum plants. This iridoid glycoside contains a formyl group and hydroxy group, and it is believed that these bind with amino groups contained in the allergen protein to reduce antigenicity.

(6) A cleaning tool as described in any one of (1) through (5) wherein the surfactant is a nonionic surfactant.

With this, the antigenicity-reducing component and lubricants can be mixed in a stable manner.

(7) A cleaning tool as described in any one of (1) through (6) wherein the lubricant is a dust-adhesive lubricant.

(8) A cleaning tool as described in any one of (1) through (7) wherein the lubricant is a mineral oil.

By using a dust-adhesive lubricant or a mineral oil as the lubricant, adhesion of the antigenicity-reducing composition to the fibrous base material is made easier. Also, disengagement of the antigenicity-reducing composition from the fibrous base material to which it is applied and transfer to the object being cleaned can be effectively prevented. Also, dust collection is improved and dust is prevented from falling away once collected.

(9) A cleaning tool as described in (8) wherein the mineral oil has a viscosity of 10 to 200 mm²/s at 30 degrees C.

It would be preferable for the viscosity of the mineral oil to be from 10 to 200 mm²/s at 30 degrees C, and from 15 to 120 mm²/s more preferably. If the viscosity is less than 10 mm²/s, the composition may be transferred excessively to the object being cleaned and can adhere to hands, resulting in a sticky feeling. If the viscosity exceeds 200 mm²/s, dust adsorption is reduced.

(10) A cleaning tool as described in (4) or (5) wherein the fibrous base material is white.

With this, since the olive extract and oleuropein described above have little coloring, there is no problem with the fibrous base material being discolored. As a result, since white fibrous base materials can be used as in the past, adhered dust and particles can be easily recognized.

(11) A cleaning tool as described in (1) to (10) wherein the antigenicity-reducing component is from 0.01 to 10 percent by mass, the lubricant is from 50 to 95 percent by mass, and the surfactant is from 1 to 50 percent by mass relative to the entire antigenicity-reducing composition.

By using these ranges of proportions, dust can be collected using the dust-adhesive capabilities of the fibrous base material itself as well as the lubricant. Furthermore, the antigenicity-reducing composition can reduce the antigenicity of allergy-inducing matter contained in the collected dust.

(12) A cleaning tool as described in (11) wherein the antigenicity-reducing composition is from 1 to 15 percent by mass relative to the entire fibrous base material to which the antigenicity-reducing composition is applied.

By having the antigenicity-reducing composition be at least 1 percent by mass relative to the entire fibrous base material, adequate antigenicity reduction can be provided. Since the proportion of antigenicity-reducing component that is added in this case would be 0.01 - 10 percent by mass, a suitable effect can be provided with a very small amount of the antigenicity-reducing component.

By having the antigenicity-reducing composition be 15 percent by mass or less relative to the entire fibrous base material, transfer of the antigenicity-reducing composition to the object being cleaned due to excessive adhesion of the antigenicity-reducing composition can be prevented.

(13) A cleaning tool as described in (11) wherein the antigenicity-reducing composition is from 3 to 15 percent by mass relative to the entire fibrous base material to which the antigenicity-reducing composition is applied.

(14) A cleaning tool as described in (13) wherein at least a portion of the antigenicity-reducing composition is transferred to the object being cleaned.

In the cleaning tools in (13) and (14), the antigenicity-reducing composition is at least 3% by mass relative to the entire fibrous base material. This provides an adequate antigenicity-reducing effect for the cleaning tool. Also, by allowing at least a portion of the antigenicity-reducing composition to be transferred to the object being cleaned, it is possible to provide an antigenicity-reducing effect to the object being cleaned as well as to providing a waxing effect resulting from transfer of oil. By having the antigenicity-reducing composition be 15 percent by mass or less relative to the entire fibrous base material, excessive transfer of the antigenicity-reducing composition to the object being cleaned due to excessive adhesion of the antigenicity-reducing composition can be prevented. Also, adhesion to the hands, resulting in a sensation of stickiness, can be prevented.

In this manner, the cleaning tools in (13) and (14) provide antigenicity reduction for the cleaning tool, while also providing antigenicity reduction in the object being cleaned and further providing a waxing effect to the floor surface. Thus, the present invention can be used effectively in floor-type cleaning tools.

The present invention is able to provide a cleaning tool that can reduce the antigenicity of allergy-inducing matter adhered to the cleaning tool.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1 is a perspective drawing showing an example of a cleaning tool according to the present invention.
Fig. 2 is an exploded perspective drawing of the fibrous base material in Fig. 1.
Fig. 3 is a perspective drawing showing another example of a cleaning tool according to the present invention.

### PREFFERED MODE FOR CARRYING OUT THE INVENTION

### Antigenicity-reducing composition

The antigenicity-reducing composition applied to the cleaning tool of the present invention includes: (a) an antigenicity-reducing component that reduces the antigenicity of allergy-inducing matter; (b) a lubricant; and (c) a surfactant. These components will be described below.

### Antigenicity-reducing component

The "antigenicity-reducing component" used in the present invention limits allergic reactions by reducing the antigenicity of allergy-inducing matter. It would be preferable for the component to be a plant-derivative component. The allergy-inducing matter (allergen) can be, e.g., inhaled allergens such as cedar pollen, grass pollen, mites, house dust, animals, fungi (mold), and insects.

There are no special restrictions on the specific antigenicity-reducing component used, but examples include olive extracts, privet extracts, and extracts from pomegranate, neem, persimmon, tea, bamboo, perilla, peppermint, Japanese Hinoki cypress (Chamaecyparis obtusa), Hiba arborvitae (Thujopsis dolabrata), eucalyptus, tea tree, and the like. Examples of extracted compounds include: tannic acid, gallic acid, and the like. Other examples include: high molecular weight compounds in which a side chain of a linear high molecular weight repeating unit includes a phenol group that is monovalent or higher such as poly (para-vinyl phenol); high molecular weight compounds in which a side chain of linear high molecular weight repeating units includes a phenol group that is monovalent such as dioxybenzoic acid polymer; a polyoxyethylene chain such as disodium lauryl diphenyl ether disulfonic acid and/or a benzene sulfonate that is bivalent or higher and includes an ethylene chain in its molecule and/or a hydroxybenzoic acid such as a sulfate that is bivalent or higher and includes an ethylene chain in its molecule, a hydroxy benzoate such as 2,5-dihydroxy benzoate, or the like; an aromatic hydroxy compound; a carbonate of an alkali metal; alum; lauryl benzene sulfonic acid; lauryl sulfate; polyoxyethylene lauryl ether sulfate; phosphate; zinc sulfate and/or lead acetate; and the like.

Of the components above, it would be preferable for the antigenicity-reducing component to be based on an olive extract. The "olive extract" of the present invention is extracted from an oleum or ligustrum plant using water or an organic solvent. Also, it would be preferable for the antigenicity component to be oleuropein. Oleuropein is an iridoid glycoside. Iridoid glycosides can have a formyl group and a hydroxy group. It is believed that these bind with the amino group contained in the allergen protein to reduce antigenicity. A specific example of this type of olive extract is indicated in Patent Document 1 above.

Also, it is believed that tannic acid reduces antigenicity by the hydroxy group in polyphenol bonding with the amino group and the peptide section of the allergen protein.

The antigenicity-reducing components described above can be prepared as independent components or prepared in a solution (hereinafter referred to as antigenicity-reducing agent) containing an active ingredient such as oleuropein, a fluid extract thereof, and the like. The olive extract described above is an example of an antigenicity-reducing agent. Besides oleuropein, it would also be possible to use the extract as a compound containing ethanol and water.

### Lubricant

The "lubricant" used in the present invention is added to increase adsorption and retention of dust and particles. There are no particular restrictions on the type of lubricant, but it would be preferable to include at least one out of the following: mineral oil; silicone oil; and plant oil. Examples of mineral oil include paraffin-based hydrocarbons, naphthene-based hydrocarbons, and aromatic hydrocarbons. These lubricants can be used independently or two or more types can be mixed.

Of these, using liquid paraffin as the main component of the lubricant is preferable because it makes adhesion of the antigenicity-reducing component to the fibrous base material easier. Furthermore, once the antigenicity-reducing component is applied to the fibrous base material, the component is prevented from disengaging and getting caught in the object being cleaned.

### Surfactant

The "surfactant" used in the present invention is added to allow easy application to the cleaning tool and to make the composition uniform. It would be preferable to use a nonionic surfactant. There are no special restrictions on the nonionic surfactants, but examples of preferable polyoxyethylene alkyl ether include: polyoxyethylene lauryl ether; polyoxyethylene cetyl ether; polyoxyethylene oleyl ether; and polyoxyethylene stearyl ether. Examples of preferable sorbitan esters include: sorbitan laurate monoester; sorbitan monoester of palmitic acid; sorbitan monoester of stearic acid; and sorbitan monoester of oleic acid. Examples of preferable glycerine fatty acid esters include: mono myristic acid glyceryl; mono stearic acid glyceryl; mono oleic acid glyceryl; mono isostearic acid glyceryl; and di oleic acid glyceryl. Examples of preferable vegetable oils include: jojoba oil; avocado oil; olive oil; persic oil; grape seed oil; safflower oil; and sunflower oil. Examples of sorbitan trioleate include: sorbitan triester of stearic acid; and sorbitan triester of oleic acid. Examples of preferable ethylene oxide(EO) additives to castor oil or hydrogenated castor oil include: polyoxyethylene hydrogenated castor oil; lauric acid polyoxyethylene hydrogenated castor oil; and mono isostearic acid polyoxyethylene hydrogenated castor oil. These surfactants can be used independently or two or more types can be mixed.

### Other components

Components other than the antigenicity-reducing compositions, lubricants, and surfactant described above can also be used in the antigenicity-reducing composition of the present invention as long as they do not significantly alter the characteristics of the composition.

### Preparation of antigenicity-reducing composition

The components described above are mixed/agitated using conventional, known methods to form the antigenicity-reducing composition. The preferable proportions relative to the overall antigenicity-reducing composition of the three necessary components described above, i.e., the antigenicity-reducing component, the lubricant, and the surfactant, are as follows: in the range from 0.01 to 10 percent by mass of the antigenicity-reducing component; in the range from 50 to 95 percent by mass of the lubricant; and in the range of 1 to 50 percent by mass of the surfactant. More preferable is: in the range of 0.02 to 1 percent by mass of the antigenicity-reducing component; in the range of 60 to 80 percent by mass of the lubricant; and in the range of 20 to 40 percent by mass of the surfactant.

Using less than 0.01 percent by mass of the antigenicity-reducing component is not preferable since the antigenicity reduction for the collected particles is inadequate. A proportion greater than 10 percent by mass results in instability over time in the antigenicity-reducing composition and also increases cost.

. Using less than 50 percent by mass of the lubricant is not preferable since the lubricant provides inadequate improvement in the adhesion of dust and the like. A proportion greater than 95 percent by mass results in instability over time in the antigenicity-reducing composition and is therefore not preferable.

Using less than 1 percent by mass of the surfactant is not preferable because of instability over time in the antigenicity-reducing composition. More than 50 percent by mass reduces the amount of lubricant that can be added and is therefore not preferable.

### Cleaning tool

Next, a cleaning tool to which the above ahtigenicity-reducing composition is applied will be described. There are no special restrictions on the cleaning tool as long as it is a "dry-type" cleaning tool, i.e., an indoor cleaning tool having a fibrous base material that contains essentially no water. There are also no special restrictions on the fibrous base material, which can be formed from natural fiber, synthetic fiber, or semi-synthetic fiber. Also, there are no special restrictions on the form of the fiber, which can be woven, knitted, or nonwoven.

### Examples of cleaning tools

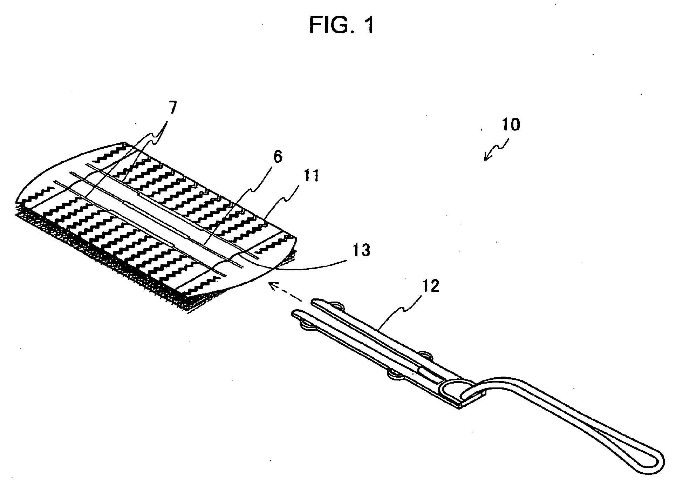

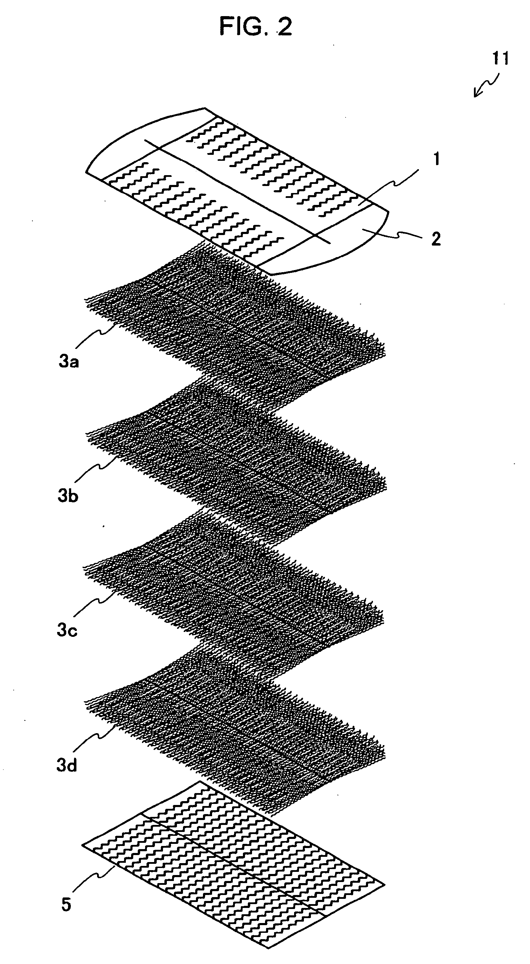

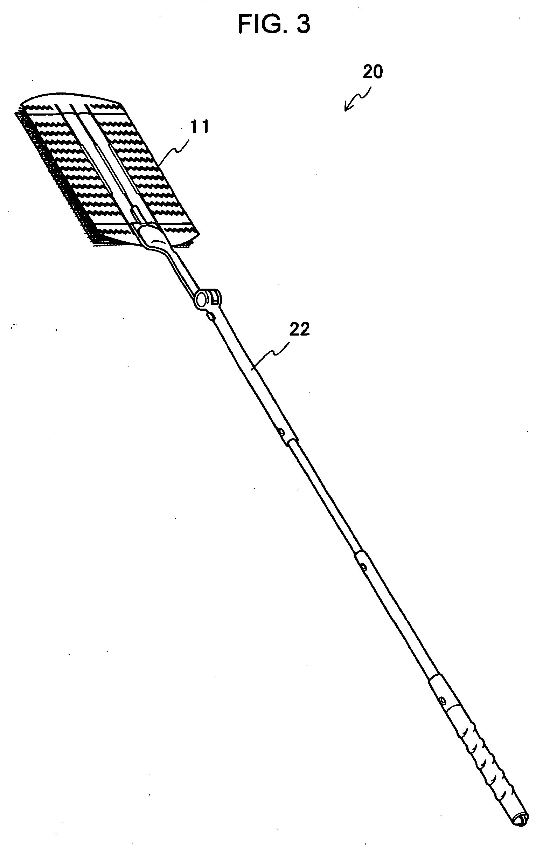

Fig. 1 and Fig. 2 show an example of this type of cleaning tool. Fig. 1 is a perspective drawing of the cleaning tool. Fig. 2 is an exploded perspective drawing of a cleaning sheet from Fig. 1. A cleaning tool 10 is a "handy-type" cleaning tool and is formed from a cleaning sheet 11, which corresponds to the fibrous base material of the present invention; and a grasping tool 12. The grasping tool 12 is interchangeable. For example, a grasping tool 22 shown in Fig. 3 can be mounted to allow the cleaning tool in Fig. 1 to be used in high places or narrow places that are difficult to reach.

As shown in Fig. 2, the cleaning sheet 11 is formed from the following layers, starting in sequence from the top: a retained sheet 1 formed from nonwoven cloth cut into multiple strips; a base sheet 2 also formed from nonwoven cloth cut into multiple strips; a first fiber bundle 3a formed from tow type fiber (i.e. a bulk of fiber); a second fiber bundle 3b formed from tow type fiber; a third fiber bundle 3c formed from tow type fiber; a fourth fiber bundle 3d formed from tow type fiber; and a strip sheet 5 in which multiple strips are formed. In this embodiment, the first fiber bundle 3a, the second fiber bundle 3b, the third fiber bundle 3c, and the fourth fiber bundle 3d form the brush section of the present invention. Thus, this brush section provides more effective cleaning. Since the antigenicity-reducing composition need only be applied to this brush section, the antigenicity-reducing composition can be applied more efficiently. The "brush section" referred to here is the section that performs the primary cleaning function in the cleaning tool of the present invention. The brush section can be a portion or all of the fibrous base material. The retained sheet 1, the base material sheet 2, the first fiber bundle 3a, the second fiber bundle 3b, the third fiber bundle 3c, the fourth fiber bundle 3d, and the strip sheet 5 are all bonded together at a layer bonding line 6. At bonding lines 7, only the retained sheet 1, the base material sheet2, the first fiber bundle 3a, and the second fiber bundle 3b are bonded. As a result, a holding space 13 is formed between the retained sheet 1 and the base material sheet 2, allowing the grasping tool 12 to be inserted and mounted. In this type of "handy-type" cleaning tool 10, 20, the antigenicity-reducing composition is applied only to the brush section formed from the first fiber bundle 3a, the second fiber bundle 3b, the third fiber bundle 3c, and the fourth fiber bundle 3d.

### Application of antigenicity-reducing composition

Examples of methods for applying the antigenicity-reducing composition to the cleaning tool described above include spraying or rollercoating the antigenicity-reducing composition onto the fibrous base material, immersion, and the like, but the present invention is not restricted to these methods.

In "handy-type" cleaning tool as shown in Fig. 1, it would be preferable to apply the antigenicity-reducing composition at 1 to 10% by weight relative to the entire fibrous base material. Applying less than 1% by weight is not preferable since it prevents dust particles from being completely retrieved. At more than 10% by weight, the composition is transferred excessively to the object being cleaned and also is transferred to the hands, resulting in a sensation of stickiness.

The present invention will be described in further detail using embodiments and comparative examples. The present invention, however, is not restricted to the embodiments described below.

### Making the antigenicity-reducing agent containing the antigenicity-reducing component

### Olive extract

Extraction is performed on the leaves of the olive plant using water, based on the third compound embodiment in Patent Document 1 (20 g of fresh olive leaves placed in 100 g water, mixed in a mixer, then filtered). Then, ethanol to prepare 0.6% oleuropein.

### Tannic acid

Tannic acid (from Wako Pure Chemical Industries, Ltd.) is dissolved in water and ethanol to prepare 15% tannic acid.

### Making the antigenicity-reducing composition

Using the two types of antigenicity-reducing agents described above, production samples 1 - 4 of the antigenicity-reducing composition were prepared using the proportions shown in Table 1.

Liquid paraffin and/or safflower oil is used as the lubricant. For the surfactant, at least one of the following is used: polyoxyethylene alkyl ether, sorbitan monoester of oleic acid, mono isostearic acid glyceryl, sorbitan triester of oleic acid, and polyoxyethylene hydrogenated castor oil. In addition, water was mixed in and agitated to prepare the antigenicity-reducing composition.

**Table 1**

| Amount of antigenicity-reducing composition (units: % by weight) | | | | | | | | | | | |
|---|---|---|---|---|---|---|---|---|---|---|---|
| | | Polyoxyethylene alkyl ether | Sorbitan oleic acid monoester | Liquid paraffin - | Water | Antigenicity-reducing component | Mono isostearic acid glyceryl | Safflower oil | Sorbitan oleic acid triester | Polyoxyethylene hydrogenated castor oil | Polyoxyethylene alkyl ether |
| Name | Test sample | Note 2) | | Note 3) | | Note 1) | | | | Note 4) | Note 5) |
| Standard lubricant | Production sample 4 | 0.8 | 1.2 | 98 | - | - | - | - | - | - | - |
| Tannic acid composition | Production sample 1 | 0.8 | 2 | 92.6 | 0.2 | 0.1 | 1 | - | 0.8 | 1 | 1.5 |
| | Production sample 2 | 0.7 | 4.8 | 74.4 | 0.2 | 3.9 | 4 | 2 | 3.5 | 2 | 4.5 |
| Oleuropein composition | Production sample 3 | 0.7 | 7.5 | 78.3 | 0.2 | 3.9 | - | - | 7 | - | 2.4 |

| | | | | | | | | | | | |
|---|---|---|---|---|---|---|---|---|---|---|---|
| Note 1) (Tannic acid): Tannic acid (Wako Pure Chemical Industries, Ltd.) was dissolved in water and ethanol to prepare 15% tannic acid. Olive extract: Olive plant leaves are extracted with water based on the third composition embodiment in Patent Document 1. Ethanol is added to prepare 0.6% oleuropein. Note 2) The EO addition to the polyoxyethylene alkyl ether was 5 moles. The number of carbon atoms in the alkyl group is 12 - 14. Note 3) 50 mm²/s viscosity at 30 degrees. C. Note 4) The EO addition to the polyoxyethylene hydrogenated castor oil was 60 moles. Note 5) The EO addition to the polyoxyethylene alkyl ether was 3 moles. The number of carbon atoms in the alkyl group is 12 - 14. | | | | | | | | | | | |

### Application of the antigenicity-reducing composition to the cleaning tool

Next, the antigenicity-reducing composition production samples 1 through 3 and the composition production sample 4 are sprayed onto the cleaning tool shown in Fig. 1 (hereinafter referred to as the "handy-type"). For each type, a first through third cleaning tool embodiment (tools on which production samples 1 through 3 were applied) and a first comparative example (tools on which the production sample 4 was applied) were obtained.

For the handy-type tools, 5 percent by mass was applied relative to the entire fibrous base material (the sheet 11 in Fig: 1).

### Evaluation

### Evaluation 1: Evaluation of antigenicity-reducing performance

Antigenicity-reducing performance on cedar pollen and dust mites was evaluated for the first, second, and third embodiments and the first comparative sample using the procedure described below. The results are shown in Tables 2 and 3. In the tables, the reduction rates are determined as 100 - 100 x (allergen volume from a cleaning tool to which antigenicity-reducing agent was applied quantified using the ELISA method) / (allergen volume from a cleaning tool to which no antigenicity-reducing agent was applied quantified using the ELISA method). The symbols in the tables indicate the following reduction rates:
Circle: good reduction rate (50% or higher)
Triangle: inferior reduction rate (10 - 50%)
X: bad reduction rate (0 - 10%)

Handy-type: Debris containing approximately 0.05 g of mite allergens (dust mites) and approximately 0.01 g cedar pollen were placed in a glass bottle having a diameter of 9 cm and a height of 17 cm. The bottle was capped and the debris and cedar pollen were dispersed throughout the bottle. The top was removed and the handy-type cleaning tool was used to wipe away the debris and cedar pollen. An extraction fluid was used on the cleaning tool to extract the allergens and the allergens were quantified using the ELISA method.

A phosphoric acid buffering agent (pH7) was used as the extraction fluid. Also, the ELISA method (enzyme-linked immunosorbent assay) is a type of quantification method (EIA: enzyme immunoassay) that uses enzyme color formation that takes place in antigen-antibody reactions. Specifically, the Sandwich technique that uses two kinds of antibody which sandwiches the object to be detected to quantify was used.

**Table 2**

| Cedar pollen antigenicity reduction rate | |
|---|---|
| | Reduction rate |
| Test sample | Hand-held |
| Comp. sample 1 | × |
| Embodiment 1 | Δ |
| Embodiment 2 | ○ |
| Embodiment 3 | ○ |

**Table 3**

| Mite antigenicity reduction rate | |
|---|---|
| | Reduction rate |
| Test sample | Hand-held |
| Comp. sample 1 | × |
| Embodiment 1 | × |
| Embodiment 2 | ○ |
| Embodiment 3 | ○ |

Based on the results from Table 2 and Table 3, it was found that the cleaning tool provided reductions with each of the antigenicity-reducing compositions. In the handy-type cleaning tool of the first embodiment, however, not as much of the antigenicity-reducing component was applied and the effect was somewhat less.

### Evaluation 2: Evaluation of reductions after exposure to heating and light

Heating test: For the cleaning tools in the second and third embodiment, the fibrous base material was placed by itself in a paper housing and covered for the handy-type cleaning tools. The packages were left indoors away from direct light, in a thermostatic chamber at 40 degrees C, and in a thermostatic chamber at 50 degrees C. Then, after one month, allergens were measured using the same method as in the Evaluation 1.

Light test: For the handy-type cleaning tools, the sheets were left unpackaged under a xenon lamp weather meter for the equivalent of one month under sunlight and six months under sunlight. Allergens were measured using the same method as in the Evaluation 1.

Results are shown in Table 4, with the reduction rates and symbols in the table indicating the same things as in Tables 2, 3. For both the cleaning tools of the second and third embodiment, the reduction effect was maintained after exposure to heating for one month. The reduction effect was also maintained after exposure to sunlight.

**Table 4**

| Mite antigenicity reduction rate | | | |
|---|---|---|---|
| | | Embodiment 2 | Embodiment 3 |
| Condition | Elapsed time | Hand-held | Hand-held |
| Immediately after application | 0 days | ○ | ○ |
| RT | One month | ○ | ○ |
| 40 degrees C | One month | ○ | ○ |
| 50 degrees C | One month | ○ | ○ |
| Light exposure | One month equivalent | ○ | ○ |
| Light exposure | Six months equivalent | ○ | ○ |

The present invention is suitable for use as an indoor cleaning tool having a fibrous base material.

Having described preferred embodiments of the invention with reference to the accompanying drawings, it is to be understood that the invention is not limited to those precise embodiments, and that various changes and modifications may be effected therein by one skilled in the art without departing from the scope of the invention as defined in the appended claims.

## Claims

1. A cleaning tool (10, 20) for indoor cleaning comprising a cleaning sheet (11), **characterized in that** the cleaning tool (10, 20) comprises a grasping tool (12, 22) and the cleaning sheet comprises a dry fibrous base material (11) formed from layers which, starting in sequence from the top, include:
a retained sheet (1) formed from nonwoven cloth cut into multiple strips;
a base sheet (2) formed from a nonwoven cloth cut into multiple strips;
fiber bundles (3a, 3b, 3c, 3d) formed from tow type fiber; and
a strip sheet (5) in which multiple strips are formed;
wherein an antigenicity-reducing composition, containing an antigenicity-reducing component for reducing antigenicity of allergy-inducing matter, a lubricant, and a surfactant, is applied only to the fiber bundles (3a, 3b, 3c, 3d) of said fibrous base material.

2. The cleaning tool as described in Claim 1, wherein said antigenicity-reducing component is aqueous or hydrophilic.

3. The cleaning tool as described in Claim 1 or Claim 2, wherein said antigenicity-reducing component is a plant extract component.

4. The cleaning tool as described in any one of Claims 1 to 3, wherein said antigenicity-reducing component is an extract from an olea or ligustrum plant extracted by using water or an organic solvent.

5. The cleaning tool as described in any one of Claims 1 to 4, wherein said antigenicity-reducing component is oleuropein.

6. The cleaning tool as described in any one of Claims 1 to 5, wherein said surfactant is a nonionic surfactant.

7. The cleaning tool as described in any one of Claims 1 to 6, wherein said lubricant is a dust-adhesive lubricant.

8. The cleaning tool as described in any one of Claims 1 to 7, wherein said lubricant is a mineral oil.

9. The cleaning tool as described in Claim 8, wherein said mineral oil has a viscosity of 10 - 200 mm²/s at 30 degrees C.

10. The cleaning tool as described in Claim 4 or Claim 5, wherein said fibrous base material is white.

11. The cleaning tool as described in any one of Claims 1 to 10, wherein said antigenicity-reducing component is 0.01 - 10 percent by mass, said lubricant is 50 -95 percent by mass, and said surfactant is 1 - 50 percent by mass relative to the entire antigenicity- reducing composition.

12. The cleaning tool as described in Claim 11, wherein said antigenicity-reducing composition is 1 - 15 percent by mass relative to the entire fibrous base material to which said antigenicity-reducing composition is applied.

13. The cleaning tool as described in Claim 11, wherein said antigenicity-reducing composition is 3 - 15 percent by mass relative to the entire fibrous base material to which said antigenicity-reducing composition is applied.

14. The cleaning tool as described in Claim 13, wherein at least a portion of said antigenicity-reducing composition is transferred to the object being cleaned.

## Patentansprüche

1. Reinigungswerkzeug (10, 20) zur Innenraumreinigung, das ein Reinigungstuch (11) aufweist, **dadurch gekennzeichnet, dass** das Reinigungswerkzeug (10, 20) ein Haltewerkzeug (12, 22) aufweist und das Reinigungstuch ein trockenes faseriges Grundmaterial (11) aufweist, das aus Schichten hergestellt ist, die von oben ausgehend nacheinander Folgende beinhalten:
ein festgehaltenes Tuch (1), das aus einem in mehrere Streifen geschnittenen Vliesstoff besteht,
ein Grundtuch (2), das aus einem in mehrere Streifen geschnittenen Vliesstofftuch besteht,
Faserbündel (3a, 3b, 3c, 3d), die aus Fasern des Rovingtyps hergestellt sind, und
ein Streifentuch (5), in dem mehrere Streifen ausgebildet sind,
wobei eine antigenwirkungsreduzierende Zusammensetzung, die eine antigenwirkungsreduzierende Komponente zur Reduzierung der Antigenwirkung von allergenen Stoffen, einen Schmierstoff und ein Tensid enthält, nur auf die Faserbündel (3a, 3b, 3c, 3d) des genannten faserigen Grundmaterials aufgebracht wird.

2. Reinigungswerkzeug nach Anspruch 1, wobei die genannte antigenwirkungsreduzierende Komponente wässrig oder hydrophil ist.

3. Reinigungswerkzeug nach Anspruch 1 oder Anspruch 2, wobei die genannte antigenwirkungsreduzierende Komponente eine Pflanzenextraktkomponente ist.

4. Reinigungswerkzeug nach einem der Ansprüche 1 bis 3, wobei die genannte antigenwirkungsreduzierende Komponente ein Extrakt einer Olea- oder Ligustrumpflanze ist, der mithilfe von Wasser oder einem organischen Lösungsmittel gewonnen wurde.

5. Reinigungswerkzeug nach einem der Ansprüche 1 bis 4, wobei die genannte antigenwirkungsreduzierende Komponente Oleuropein ist.

6. Reinigungswerkzeug nach einem der Ansprüche 1 bis 5, wobei das genannte Tensid ein nichtionisches Tensid ist.

7. Reinigungswerkzeug nach einem der Ansprüche 1 bis 6, wobei der genannte Schmierstoff ein staubbindender Schmierstoff ist.

8. Reinigungswerkzeug nach einem der Ansprüche 1 bis 7, wobei das genannte Tensid ein Mineralöl ist.

9. Reinigungswerkzeug nach Anspruch 8, wobei das genannte Mineralöl eine Viskosität von 10 bis 200 mm²/s bei 30°C hat.

10. Reinigungswerkzeug nach Anspruch 4 oder Anspruch 5, wobei das genannte faserige Grundmaterial weiß ist.

11. Reinigungswerkzeug nach einem der Ansprüche 1 bis 10, wobei die genannte antigenwirkungsreduzierende Komponente 0,01 bis 10 Massenprozent, der genannte Schmierstoff 50 bis 95 Massenprozent und das genannte Tensid 1 bis 50 Massenprozent relativ zur gesamten antigenwirkungsreduzierenden Zusammensetzung beträgt.

12. Reinigungswerkzeug nach Anspruch 11, wobei die genannte antigenwirkungsreduzierende Zusammensetzung 1 bis 15 Massenprozent relativ zum gesamten faserigen Grundmasterial beträgt, auf das die genannte antigenwirkungsreduzierende Zusammensetzung aufgebracht wird.

13. Reinigungswerkzeug nach Anspruch 11, wobei die genannte antigenwirkungsreduzierende Zusammensetzung 3 bis 15 Massenprozent relativ zum gesamten faserigen Grundmasterial beträgt, auf das die genannte antigenwirkungsreduzierende Zusammensetzung aufgebracht wird.

14. Reinigungswerkzeug nach Anspruch 13, wobei wenigstens ein Teil der genannten antigenwirkungsreduzierenden Zusammensetzung auf das zu reinigende Objekt übertragen wird.

## Revendications

1. Dispositif de nettoyage (10, 20) servant à nettoyer l'intérieur, comprenant une feuille de nettoyage (11), **caractérisé en ce que** le dispositif de nettoyage (10, 20) comporte un outil d'agrippement (12, 22) et **en ce que** la feuille de nettoyage est faite d'une matière de base sèche et fibreuse (11) composée de couches qui, à commencer par le haut, sont les suivantes:
une feuille retenue (1) constituée de toile non tissée découpée en plusieurs bandes;
une feuille de base (2) constituée de toile non tissée découpée en plusieurs bandes;
des groupes de fibres (3a, 3b, 3c, 3d) constitués de fibres du type halage; et
une feuille à bandes (5) dans laquelle sont formées plusieurs bandes;
**caractérisé en ce qu'**une composition de réduction de l'antigénicité des matières qui induisent les allergies, contenant un composé servant à réduire l'antigénicité des matières qui induisent les allergies, un lubrifiant, et un surfactant, est appliquée sur les groupes de fibres (3a, 3b, 3c, 3d) de la matière de base fibreuse.

2. Dispositif de nettoyage selon la revendication 1, **caractérisé en ce que** le composé servant à réduire l'antigénicité est aqueux ou hydrophile.

3. Dispositif de nettoyage selon la revendication 1 ou la revendication 2, **caractérisé en ce que** le composé servant à réduire l'antigénicité est un extrait de plante.

4. Dispositif de nettoyage selon l'une quelconque des revendications 1 à 3, **caractérisé en ce que** le composé servant à réduire l'antigénicité est un extrait de plante olea ou ligustrum obtenu en utilisant de l'eau comme solvant organique.

5. Dispositif de nettoyage selon l'une quelconque des revendications 1 à 4, **caractérisé en ce que** le composé servant à réduire l'antigénicité est l'oleuropéine.

6. Dispositif de nettoyage selon l'une quelconque des revendications 1 à 5, **caractérisé en ce que** le surfactant employé est un surfactant non-ionique.

7. Dispositif de nettoyage selon l'une quelconque des revendications 1 à 6, **caractérisé en ce que** le surfactant employé est un surfactant collecteur de poussière.

8. Dispositif de nettoyage selon l'une quelconque des revendications 1 à 7, **caractérisé en ce que** le lubrifiant employé est une huile minérale.

9. Dispositif de nettoyage selon la revendication 8, **caractérisé en ce que** l'huile minérale employée est d'une viscosité de 10 - 200 mm²/s à 30 degrés C.

10. Dispositif de nettoyage selon la revendication 4 ou la revendication 5, **caractérisé en ce que** la matière de base fibreuse employée est blanche.

11. Dispositif de nettoyage selon l'une quelconque des revendications 1 à 10, **caractérisé en ce que** le composé servant à réduire l'antigénicité représente 0,01 - 10 pour cent, le lubrifiant employé représente 50 - 95 pour cent, et le surfactant employé représente 1 - 50 pour cent de la masse totale de la composition de réduction de l'antigénicité.

12. Dispositif de nettoyage selon la revendication 11, **caractérisé en ce que** la composition de réduction de l'antigénicité représente 1 - 15 pour cent de la masse totale de la matière de base fibreuse sur laquelle se trouve appliquée la composition de réduction de l'antigénicité.

13. Dispositif de nettoyage selon la revendication 11, **caractérisé en ce que** la composition de réduction de l'antigénicité représente 3 - 15 pour cent de la masse de la matière de base fibreuse sur laquelle se trouve appliquée la composition de réduction de l'antigénicité.

14. Dispositif de nettoyage selon la revendication 13, **caractérisé en ce qu'**au moins une partie de la composition de réduction de l'antigénicité est transférée à l'objet en cours de nettoyage.
